# EUROPÄISCHE PATENTSCHRIFT

(11) **EP 1 198 723 B1**
(45) Veröffentlichungstag und Bekanntmachung des Hinweises auf die Patenterteilung: **24.11.2004**
(21) Anmeldenummer: 00954500.5
(22) Anmeldetag: 14.07.2000
(51) Int. Cl.: G01S 13/93, G01S 7/40

(54) **VERFAHREN ZUM JUSTIEREN EINES AN EINEM FAHRZEUG ANGEORDNETEN RADARSENSORS**
METHOD FOR ADJUSTING A RADAR SENSOR MOUNTED ON A MOTOR VEHICLE
PROCEDE D'AJUSTAGE D'UN DETECTEUR RADAR MONTE DANS UN VEHICULE

(30) Priorität: 04.08.1999 DE 19936609
(43) Veröffentlichungstag der Anmeldung: 24.04.2002
(73) Patentinhaber: Bayerische Motoren Werke Aktiengesellschaft, 80809 München (DE)
(72) Erfinder: BAUER, Günter, D-94526 Metten (DE); SAUER, Thomas, D-80804 München (DE); EBERL, Markus, D-84180 Loiching (DE); PRESTL, D-82223 Eichenau (DE)
(86) Internationale Anmeldenummer: PCT/EP2000/006723
(87) Internationale Veröffentlichungsnummer: WO 2001/011387

(56) Entgegenhaltungen:
- WO-A-99/27385
- DE-A- 19 840 307
- DE-C- 19 642 810
- DE-C- 19 707 591

## Beschreibung

Die Erfindung bezieht sich auf ein Verfahren mit den Merkmalen des Oberbegriffs von Patentanspruch 1.

Derartige Sensoren werden zunehmend eingesetzt. Sie dienen im Rahmen von ACC (Automatic Cruise Control) -Einrichtungen dazu, den Abstand des Fahrzeugs vom jeweiligen Vordermann zu bestimmen und durch eine entsprechende Steuerung der Antriebseinheiten konstant zu halten. Voraussetzung füreine ordnungsgemäße Funktion ist eine exakte Justierung des Radarsensors bezüglich der Fahrzeuglängsachse. Diese Justierung muß vor der erstmaligen Inbetriebnahme des Systems, d. h. bereits im Rahmen der Fertigung des Fahrzeugs bzw. im Rahmen der Montage vorgenommen werden. Das besondere Problem dabei besteht darin, daß eine mögliche Dejustierung um wenige Grad von außen nicht erkennbar ist, andererseits aber hinsichtlich der Funktionsfähigkeit des Gesamtsystems erhebliche Auswirkungen hat. Liegt eine Dejustierung vor, so werden versetzt vorausfahrende Fahrzeuge vom System als unmittelbar vorausfahrend beurteilt, während tatsächlich unmittelbar vorausfahrende als versetzt fahrende Fahrzeuge interpretiert werden.

Der Stand der Technik ist mit folgenden Problemen behaftet:
- Die Reflektorplatte muß senkrecht zur Fahrzeugachse ausgerichtet werden, sowohl in vertikaler als auch in horizontaler Richtung. Ersteres kann dadurch gelöst werden, daß eine gemeinsame Bezugsebene für Fahrzeug und Reflektor verwendet wird.
- Ist nun der Reflektor senkrecht zur Fahrzeugachse ausgerichtet, so werden die Empfangssignale aller Radarkanäle (z.B. linke, mittlere, rechte Keule) miteinander verglichen. Ist z.B. die Empfangsamplitude der rechten Keule stärker als die der linken, so kann auf eine Dejustage des Sensors nach links geschlossen werden, jedoch nicht auf den Betrag des Dejustagewinkels. Stand der Technik ist deshalb ein "trial and error"-Verfahren. Nach Ermittlung der Richtung der Dejustage wird die Einbaulage des Sensors um einen willkürlichen Winkelbetrag korrigiert und die Messung wiederholt, bis sich das Vorzeichen des Dejustagewinkels ändert. Dieser iterative Prozeß ist äußerst zeitaufwendig und in keinster Weise für eine Serienfertigung geeignet.

Der Erfindung liegt die Aufgabe zugrunde, ein Verfahren der eingangs genannten Art zu schaffen, das auf einfache Weise eine exakte Justierung des Radarsensors ermöglicht.

Die Erfindung löst diese Aufgabe durch die Merkmale des Patentanspruchs 1.

Der Erfindung liegen folgende Ideen zugrunde:
- Horizontale Ausrichtung des Reflektors über Messung der Abstände zwischen den Hinterrädern und dem Reflektor und daraus Berechnung des Fahrzeugschrägwinkels bezüglich des Reflektors.
- Verwendung eines Reflektors, der um eine horizontale und vertikale Achse um beliebige Winkelbeträge schwenkbar ist. Erst nachdem die endgültigen vertikalen und horizontalen Dejustagewinkel bestimmt worden sind, muß die Einbaulage des Sensors korrigiert werden. Außerdem werden die Auswerteeinheit für die Radarsignale und der Verstellmechanismus der Reflektorplatte miteinander gekoppelt, so daß ein vollautomatisierter Ablauf zur Verfügung steht, der keinerlei manuelles Eingreifen benötigt

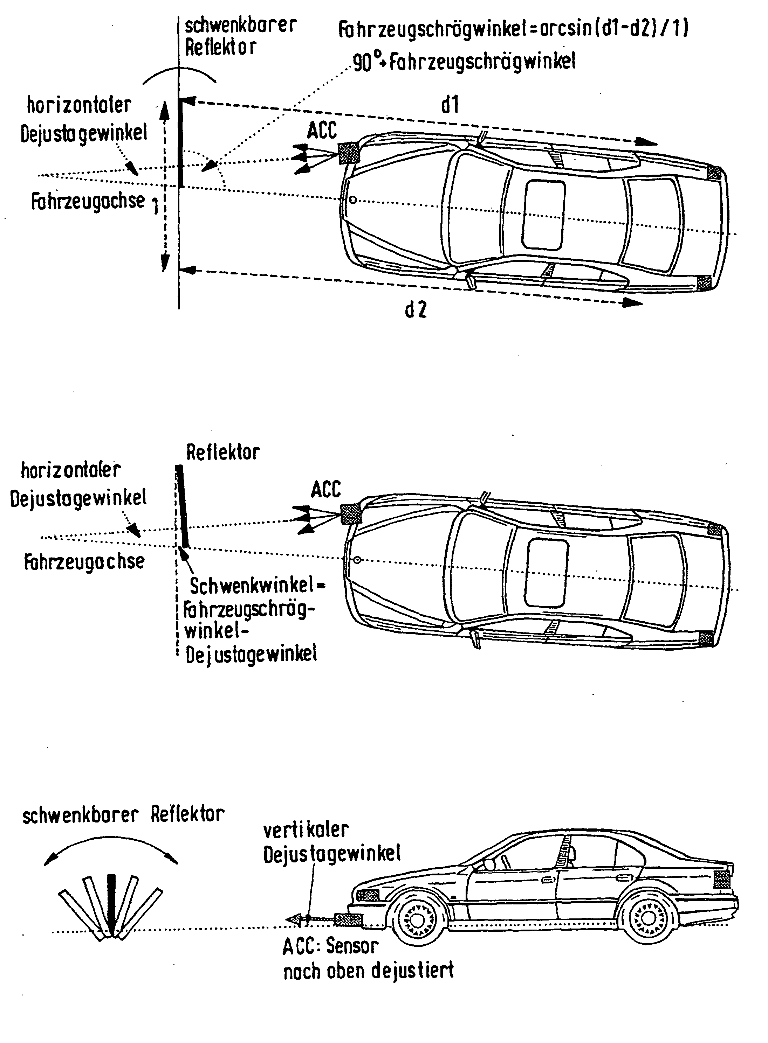

Der Ablauf wird an dem in Abb. 1 dargestellten Beispiel erläutert.

### Ausrichtung des Reflektors:

Zunächst ist der Reflektor nicht zur Fahrachse ausgerichtet, d.h. Reflektor und Fahrachse weichen von der senkrechten Stellung um den sogenannten Fahrzeugschrägwinkel ab. Dieser kann über die Messung der Abstände der Hinterachse zum Reflektor berechnet werden. Die Nullage des Reflektors wird korrigiert, indem dieser um den Fahrzeugschrägwinkel geschwenkt wird, so daß Reflektor und Fahrzeugachse einen rechten Winkel bilden. Der Fahrzeugschrägwinkel ist damit gleich dem Wert 0.

### Horizontale Justage:

Der ACC-Sensor ist in Abb. 1 in bezug auf die Fahrachse nach links dejustiert. Das bedeutet bei einem dreikeuligen Sensor, daß das Empfangssignal im rechten Kanal stärker ist als im linken. Über eine automatische Schwenkeinrichtung wird der Reflektor deshalb solange gegen den Uhrzeigersinn geschwenkt, bis die Empfangsstärken im linken und rechten Kanal gleich sind. Die Stellung des Reflektors zu diesem Zeitpunkt entspricht der Differenz aus dem ursprünglichen, vor der "Ausrichtung des Reflektors" vorliegenden Fahrzeugschrägwinkel und dem horizontalen Dejustagewinkel des Sensors. Ist, wie beschrieben, der Fahrzeugschrägwinkel gleich 0, ist der Schwenkwinkel des Reflektors somit betragsmäßig gleich dem horizontalen Dejustagewinkel. Letzterer konnte somit ermittelt werden, ohne daß die Einbaulage des Sensors verändert werden mußte.

Erst dadurch wird eine serienmäßige und automatische Justage des Sensors möglich, die anhand von Abb. 2 erläutert ist. Hierzu wird der horizontale Dejustagewinkel des Sensors auf den Wert 0 eingestellt. Das Empfangssignal im rechten Kanal ist gleich dem Empfangssignal im linken Kanal.

Der erfindungsgemäß verwendete schwenkbare Reflektor bietet außerdem noch alternative Justagestrategien, z.B. die Aufzeichnung des gesamten Antennendiagramms durch einen Schwenk des Reflektors über den gesamten horizontalen Winkelbereich. Der Dejustagewinkel kann danach durch eine Analyse der Meßdaten bestimmt werden.

### Vertikale Justage:

Da der im Beispiel (Abb. 3) vorgestellte ACC-Sensor keine Winkelauflösung in vertikaler Richtung ermöglicht, wird zur Korrektur einer zusätzlichen vertikalen Dejustage des Sensors folgendermaßen verfahren. Der Reflektor wird zusätzlich vertikal über den gesamten Winkelbereich geschwenkt. Dabei werden die Empfangssignale aller drei Antennenkeulen oder auch nur. einzelner Keulen aufgezeichnet. Eine sich daran anschließende Analyse dieser Meßdaten liefert den vertikalen Dejustagewinkel. Auch hier ist es nicht nötig, während der Bestimmung des Dejustagewinkels die Einbaulage des Sensors zu korrigieren.

Erst nachdem sowohl der horizontale als auch der vertikale Dejustagewinkel durch ein automatisiertes Verfahren bestimmt worden sind, wird die Einbaulage des ACC-Sensors korrigiert. Es genügt somit auch bei einer horizontalen und einer vertikalen Dejustage im Gegensatz zum bisherigen iterativen Verfahren ein einziger Korrekturschritt.

Auf diese Weise ist es schnell und einfach möglich, den Radarsensor 1 optimal zu justieren.

## Patentansprüche

1. Verfahren zum Justieren eines an einem Fahrzeug angeordneten Radarsensors mit drei fächerförmig ausgesandten Radarkeulen, von denen eine zentral und die beiden anderen seitlich unter demselben Winkel verlaufen, **dadurch gekennzeichnet, daß** eine im Abstand vom Fahrzeug und senkrecht zur Fahrzeuglängsache angeordnete Reflektorplatte um eine vertikale Achse geschwenkt und die Lagewinkelabweichung der Reflektorplatte von einer ldeallage bestimmt wird, bei der die beiden seitlichen Radarkeulen ein zumindest annähernd gleiches Reflexionssignal liefern, und daß anschließend der Radarsensor um einen Korrekturwinkel geschwenkt wird, der entgegengesetzt gleich der Lagewinkelabweichung der Reflektorplatte ist.

2. Verfahren nach Anspruch 1, **dadurch gekennzeichnet, daß** die Reflektorplatte auch um eine quer zur Fahrzeugachse und horizontal verlaufende Achse schwenkbar ist und daß die vertikale Einbaulage des Radarsensors aus dem Verhalten der Reflexionssignale der Radarkeulen abgeleitet wird, wenn die Reflektorplatte jeweils um einige Winkelgrade gegenüber einer Lage nach oben und unten geschwenkt wird, die senkrecht zur Fahrzeuglängsachse ist.

3. Verfahren nach einem der Ansprüche 1 oder 2, **dadurch gekennzeichnet, daß** vorbereitend die Lage der Reflektorplatte bezüglich der Fahrzeuglängsachse bestimmt wird.

4. Verfahren nach Anspruch 3, **dadurch gekennzeichnet, daß** die Abstände der Reflektorplatte von den Mittelachsen der Fahrzeughinterräder bestimmt werden.

## Claims

1. Method for adjusting a radar sensor which is arranged on a vehicle and comprises three radar lobes emitted in a fan-shaped manner, one of which runs centrally and the two others run laterally at the same angle, **characterised in that** a reflector plate arranged at a distance from the vehicle and perpendicular to the longitudinal axis of the vehicle is pivoted about a vertical axis and the deviation of the position angle of the reflector plate from an ideal position, in which the two lateral radar lobes supply an at least virtually identical reflection signal, is determined, and **in that** the radar sensor is then pivoted by a correction angle which is equal to the deviation of the position angle of the reflector plate but in the opposite direction.

2. Method according to claim 1, **characterised in that** the reflector plate can also be pivoted about an axis extending transverse to the axis of the vehicle and horizontally and **in that** the vertical installation position of the radar sensor is derived from the behaviour of the reflection signals of the radar lobes when the reflector plate is pivoted upwards and downwards in each case by a few angular degrees relative to a position which is perpendicular to the longitudinal axis of the vehicle.

3. Method according to either of claims 1 or 2, **characterised in that** the position of the reflector plate with respect to the longitudinal axis of the vehicle is determined in preparation.

4. Method according to claim 3, **characterised in that** the distances of the reflector plate from the central axes of the rear vehicle wheels are determined.

## Revendications

1. Procédé d'ajustage d'un capteur radar équipant un véhicule et présentant trois lobes d'émission répartis en éventail, avec un lobe central et deux lobes latéraux faisant le même angle,
**caractérisé en ce qu'**
on bascule autour d'un axe vertical une plaque de réflecteur installée à distance du véhicule et perpendiculaire à l'axe longitudinal du véhicule et on détermine la déviation de la position angulaire de la plaque de réflecteur par rapport à la position idéale pour laquelle les deux lobes latéraux du radar fournissent des signaux de réflexion au moins sensiblement identiques et
ensuite on bascule le capteur radar de l'angle de correction égal mais de sens opposé à la déviation angulaire de la position de la plaque de réflecteur.

2. Procédé selon la revendication 1,
**caractérisé en ce qu'**
on bascule la plaque de réflecteur également autour d'un axe horizontal, transversal par rapport à l'axe du véhicule et
on déduit la position de montage vertical du capteur radar à partir du comportement des signaux de réflexion des lobes d'émission du radar si la plaque de réflecteur est chaque fois basculée vers le haut et vers le bas de quelques degrés angulaires par rapport à une position perpendiculaire à l'axe longitudinal du véhicule.

3. Procédé selon l'une des revendications 1 ou 2,
**caractérisé en ce que**
de manière préparatoire on détermine la position de la plaque de réflecteur par rapport à l'axe longitudinal du véhicule.

4. Procédé selon la revendication 3,
**caractérisé en ce qu'**
on détermine la distance entre la plaque de réflecteur et l'axe moyen des roues arrière du véhicule.
